# EUROPÄISCHE PATENTSCHRIFT

(11) **EP 1 279 558 B1**
(45) Veröffentlichungstag und Bekanntmachung des Hinweises auf die Patenterteilung: **12.05.2004**
(21) Anmeldenummer: 02090281.3
(22) Anmeldetag: 25.07.2002
(51) Int. Cl.: B60R 1/074, B60R 1/06

(54) **Fahrzeugaussenspiegel**
Exterior rear-view mirror
Rétroviseur extérieur

(30) Priorität: 27.07.2001 DE 10137429
(43) Veröffentlichungstag der Anmeldung: 29.01.2003
(73) Patentinhaber: Magna Reflex Holding GmbH, 97959 Assamstadt (DE)
(72) Erfinder: Juraschek, Peter, 74385 Pleidelsheim (DE)
(74) Vertreter: Pfenning, Meinig & Partner GbR

(56) Entgegenhaltungen:
- EP-A- 0 023 620
- DE-A- 19 623 885

## Beschreibung

Die vorliegende Erfindung betrifft einen Fahrzeugaußenspiegel nach dem Oberbegriff des Anspruchs 1.

Ein solcher Fahrzeugaußenspiegel ist z.B. aus der Deutschen Offenlegungsschrift DE 196 23 885 A1 bekannt. Diese zeigt z.B. in Fig. 4 einen Außenspiegel mit einem Spiegelfuß und einem Spiegelkopf, wobei Spiegelfuß und Spiegelkopf über eine Anlenkung beidseits gelenkig miteinander verbunden sind. Diese Anlenkung ermöglicht, daß der Spiegelkopf sowohl zur Fahrzeugfront hin überstreckt als auch zum Fahrzeugheck hin abgeklappt werden kann (in die "Parkstellung"). Diese Beweglichkeit ist aufgrund gesetzlicher Vorschriften nötig, um die Widerstandskraft des Spiegelkopfes, z.B. bei der Berührung von Passanten, zu begrenzen. Zwischen Spiegelkopf und Spiegelfuß ist eine Zugfeder gespannt, welche sicherstellt, daß der Spiegelkopf üblicherweise seitlich vom Fahrzeug absteht ("Fahrstellung", so daß ein Fahrzeuginsasse durch Blick auf ein im Spiegelkopf gehaltenes Spiegelflächenelement eine Sicht nach hinten bekommt.

Dieser Außenspiegel nach dem Stand der Technik erfüllt die an ihn gestellten Funktionsanforderungen voll und ganz. Nachteilig ist allerdings, daß der Spiegelfuß, die Anlenkung sowie die mit der Anlenkung gelenkig verbundenen Teile des Spiegelkopfes wegen der Stabilitätsanforderungen an den Außenspiegel üblicherweise aus Metall sein müssen. Dies ist zum einen kostenintensiv, zum anderen ist der Außenspiegel auch aufgrund der Zugfeder, welche den Spiegelkopf in die "Fahrstellung" zieht, relativ groß.

Der vorliegenden Erfindung liegt daher die Aufgabe zugrunde, einen Fahrzeugaußenspiegel zu schaffen, welcher einerseits kostengünstig zu fertigen und andererseits kleinbauend ist, wobei jedoch sämtliche gesetzlichen Sicherheitsanforderungen problemlos erfüllt werden müssen.

Diese Aufgabe wird durch einen Fahrzeugaußenspiegel nach Anspruch 1 gelöst.

Dadurch, daß die Anlenkung zwischen Spiegelfuß und Spiegelkopf (bzw. einem zum Spiegelkopf gehörigen Spiegelrahmen) als Drahtbügel ausgeführt ist, welcher zur Arretierung des Spiegelkopfes bezüglich des Spiegelfußes in mindestens eine Rastaufnahme einschnappbar ist, kann eine eingangs beschriebene Zugfeder entfallen. Die Arretierung des Spiegelkopfes bezüglich des Spiegelfußes, etwa in der Fahrstellung, wird dadurch gewährleistet, daß der Drahtbügel, welcher die Funktion des Zwischengelenkes erfüllt, in eine Rastaufnahme einschnappt. Hierdurch wird eine flexible Befestigungskraft (Verklipsung) geschaffen, welche den Spiegelkopf quasi elastisch in der richtigen Stellung hält.

Dies zieht gravierende Vorteile nach sich. Zum einen ist die Anlenkung sehr kostengünstig zu fertigen, da statt eines z.B. kostenaufwendigen Aluminiumdruckgußteiles ein Drahtbügel aus einfachem Stahldraht gebogen werden kann. Der Drahtbügel kann aber auch andere Geometrien (etwa Flachquerschnitte etc.) haben und aus anderen Materialien (aus Kunststoff oder anderen Metallen als Stahl) sein. Wesentlich ist lediglich, daß er die erfindungsgemäße federnde Eigenschaft hat. Außerdem können Spiegelfuß und Rahmen aus Stoffen hergestellt werden, welche praktisch nur Druckkräften standhalten müssen, es können also hier günstige thermoplastische Kunststoffteile zum Einsatz kommen (selbstverständlich können diese Teile aber auch aus Metall gefertigt sein). Hierdurch wird der erfindungsgemäße Außenspiegel sehr kostengünstig.

Außerdem kann der Außenspiegel auch sehr kleinbauend realisiert werden, da die bislang verwendete Zugfeder zur Arretierung in der Fahrstellung nicht mehr notwendig ist. Somit wird es möglich, auf sehr viel kleinerem Raum als bisher einen Spiegelkopf mit zusätzlichen Elementen, wie etwa einem integrierten Fahrtrichtungsanzeiger, zur Verfügung zu stellen.

Vorteilhafte Weiterbildungen der vorliegenden Erfindung werden in den abhängigen Ansprüchen angegeben.

Unter Rastaufnahme können erfindungsgemäß beliebige Ausnehmungen am Spiegelfuß bzw. am Spiegelkopf realisiert sein, welche dazu dienen, Teile des Drahtbügels zu fixieren. Hierbei wird die federnde Wirkung des Drahtbügels ausgenutzt, welche es ermöglicht, den Drahtbügel z.B. zunächst über eine Erhöhung zu schieben (unter elastischer Verformung des Drahtbügels) und ihn durch dessen Rückstellkräfte dann in die Ausnehmung einschnappen zu lassen, wodurch auch eine Fixierung des Drahtbügels und somit auch des Spiegelkopfes stattfindet.

Als besonders stabile und kostengünstig zu fertigende Ausführungsform empfiehlt sich ein "U"-förmiger Drahtbügel. Dies ermöglicht es z.B., daß eine Rastausnehmung so ausgebildet werden kann, daß sie die Schenkel des "U" umgreift. Somit wird es möglich, daß die Schenkel des "U" parallel von je einem Teil der Rastausnehmung aufgespreizt bzw. zusammengedrückt werden, so daß die federnde Wirkung des "U"-förmigen Bauteils ausgenutzt wird. Eine solche Anordnung der Rastausnehmung empfiehlt sich insbesondere, um den Drahtbügel am Spiegelfuß zu fixieren.

Zur beidseits gelenkigen Lagerung empfiehlt sich ebenfalls die "U"-förmige Form des Drahtbügels, wobei an umgebogenen freien Schenkelenden des "U" z.B. der Spiegelfuß und an der Unterseite des "U" der Spiegelrahmen des Spiegelkopfes befestigt werden kann. Weitere Rastaufnahmen können an beliebigen Stellen des Drahtbügels eingreifen, als besonders günstig hat es sich erwiesen, Rastausnehmungen des Spiegelkopfes vorzusehen, welche in die umgebogenen Schenkel des "U"-förmigen Drahtbügels eingreifen und somit, im Zusammenspiel mit den Rastausnehmungen, welche den Drahtbügel am Spiegelfuß fixieren, eine komplette Fixierung des Spiegelkopfes in der Fahrstellung erreichen.

Der "U"-förmige Drahtbügel kann auch beliebige Abwandlungen zeigen, so kann z.B. zur Variierung der elastischen Eigenschaften bzw. zur Raumersparnis eine Stufung der Schenkel des "U" vorgesehen werden. Ebenso sind mehrere Materialien für den Drahtbügel möglich (Stahl, Kupfer, unter Umständen Kunststoffe), für die Großserienfertigung bietet sich vor allem Stahldraht an.

Ein weiterer großer Vorteil der erfindungsgemäßen Konstruktion liegt darin, daß der am Fahrzeug zu fixierende Spiegelfuß sowie der Spiegelkopf (inkl. seines Rahmens) aus Kunststoff gefertigt werden kann. Mit der erfindungsgemäßen Schnappwirkung des Drahtbügels ist es möglich, den Spiegel so zu konstruieren, daß er primär Druckkräfte und weniger Biegungs- bzw. Zugkräfte überträgt, dies kommt den Werkstoffeigenschaften der kostengünstigen Kunststoffe entgegen. Es ist somit möglich, praktisch den gesamten Außenspiegel (unter Umständen mit Ausnahme des Drahtbügels) aus Kunststoff zu fertigen. Die Lagerung des Drahtbügels in Kunststoffteilen bietet hier sogar den Vorteil, daß Kunststoffe in der Regel bessere vibrationsdämpfende Eigenschaften haben als Metalle, so daß in der Regel auf zusätzliche Schwingungsdämpfer, etwa durch Zusatzmassen, verzichtet werden kann.

Eine weitere vorteilhafte Ausführungsform sieht vor, daß der erfindungsgemäße Fahrzeugaußenspiegel eine Arretiereinrichtung zum Halten des Spiegelkopfes aufweist. Mit dieser Arretiereinrichtung können verschiedene Ziele verfolgt werden. Zum einen ist es möglich, daß hiermit der Spiegelkopf in einer definierten abgeklappten "Parkstellung" gehalten werden kann. Zum anderen ist hiermit auch eine Begrenzung des Bewegungswinkels des Spiegelkopfes bezüglich des Spiegelfußes möglich.

Weitere vorteilhafte Weiterbildungen der vorliegenden Erfindung werden in den übrigen abhängigen Ansprüchen angegeben.

Die vorliegende Erfindung wird nun anhand mehrerer Figuren erläutert. Es zeigen:
- Fig. 1a: den Querschnitt eines erfindungsgemäßen Fahrzeugaußenspiegels, welcher an einem Fahrzeug montiert ist, in der "Fahrstellung",
- Fig. 1b: den Querschnitt A-A aus Fig. 1a,
- Fig. 1c: eine Ansicht X des Schnittes aus Fig. 1b,
- Fig. 2: einen erfindungsgemäßen Fahrxeugaußenspiegel in der "Parkstellung",
- Fig. 3: einen erfindungsgemäßen Fahrzeugaußenspiegel in der "überstreckten Stellung".

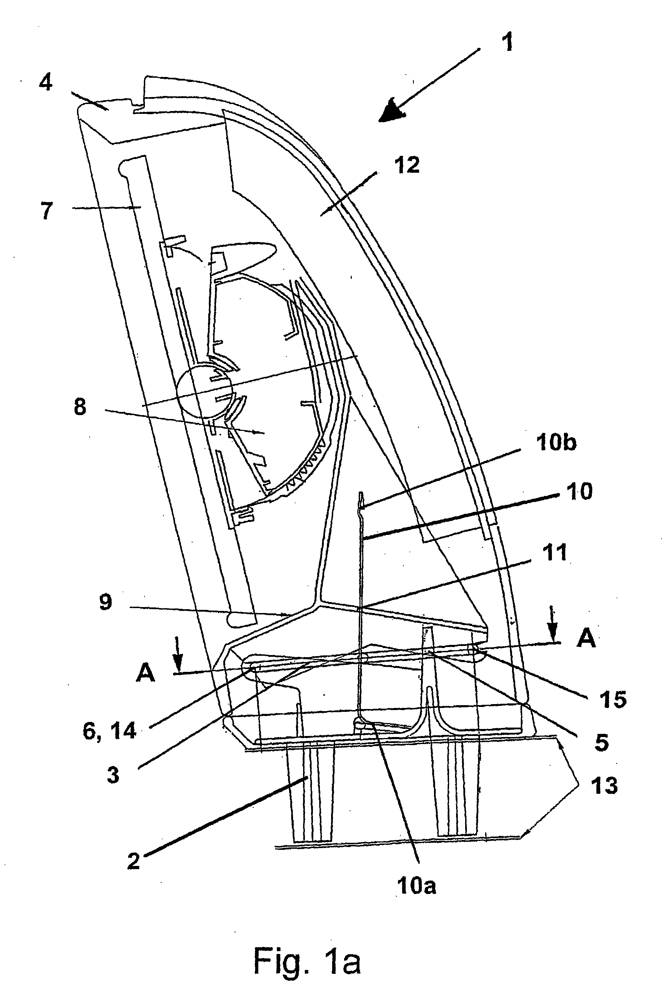

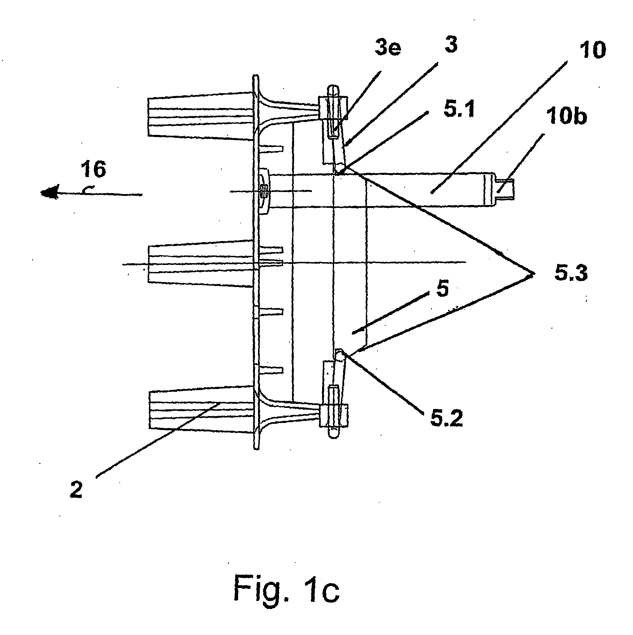

Fig. 1a zeigt einen erfindungsgemäßen Fahrzeugaußenspiegel 1. Dieser weist einen als Kunststoffspritzgußteil ausgeführten Spiegelfuß 2 auf. Dieser ist auf nicht näher dargestellte Weise fest an einem doppelwandigen Teil 13 des Fahrzeugchassis befestigt. Der Spiegelfuß ist über ein Gelenk 14 mit der Anlenkung 3 gelenkig verbunden. Die Anlenkung ist wiederum über ein Gelenk 15 mit einem Rahmen 9 eines Spiegelkopfes 4 gelenkig verbunden. Die Anlenkung ist als Drahtbügel ausgeführt. Dieser ist an der Rastausnehmung 5 am Spiegelfuß 2 lösbar festgelegt und an der Rastausnehmung 6 an dem Spiegelkopf zusätzlich lösbar festgelegt. Dies führt dazu, daß der Spiegelkopf bezüglich des Spiegelfußes wie in Fig. 1a gezeigt, in der "Fahrstellung" lösbar fixiert ist. Auf Einzelheiten des Drahtbügels und seiner Befestigung wird weiter unten nochmals detailliert eingegangen.

Im Übrigen weist der Spiegelkopf 4 einen Blinker 12 zur Fahrtrichtungsanzeige auf. Außerdem trägt der Rahmen 9 des Spiegelkopfes 4 einen Verstellantrieb 8 zum Verstellen eines Spiegelflächenelements 7. Der Rahmen 9 ist, ebenso wie der Spiegelfuß, aus einem thermoplastischen Kunststoff gefertigt. Selbstverständlich ist es jedoch auch möglich, diesen auf herkömmliche Weise aus Metall zu fertigen. Im Übrigen sei ausgeführt, daß in den vorliegenden Abbildungen aus Gründen der Vereinfachung die elektrischen Zuleitungen zu dem Blinker 12 sowie dem Verstellantrieb 8 nicht dargestellt sind.

Am Spiegelfuß 2 ist außerdem eine als Arretiereinrichtung dienende Blattfeder 10 mit dem umgebogenen Ende 10a befestigt. Diese im Profil dargestellte Blattfeder weist an ihrem anderen Ende 10b zunächst einen Widerhaken und dann eine nachgeordnete Stufung auf. Das Ende 10b ist so ausgeführt, daß es eine korrespondierende Öffnung 11 des Rahmens 9 hintergreift. Auf die Funktion der Arretiereinrichtung wird weiter unten nochmals näher eingegangen.

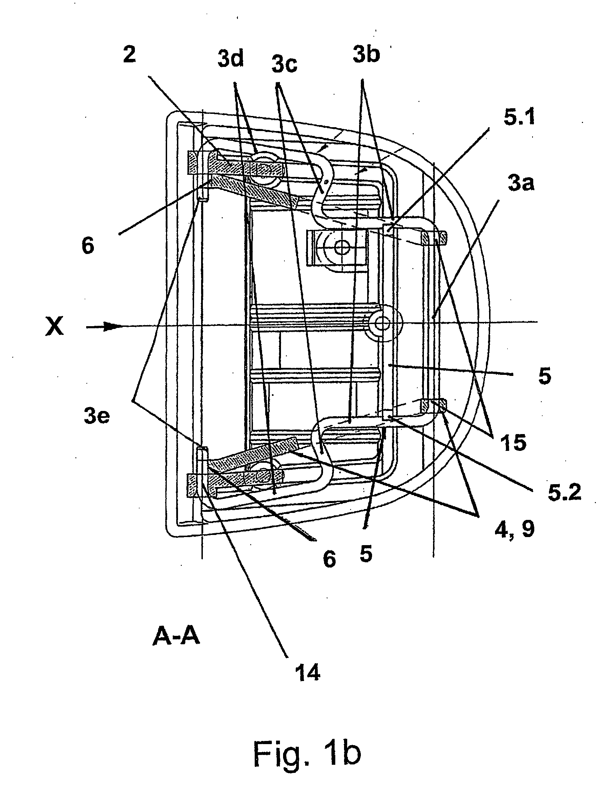

Fig. 1b zeigt einen Schnitt durch den in Fig. 1a gezeigten Fahrzeugaußenspiegel gemäß A-A. Hierin ist die Geometrie des als Anlenkung dienenden Drahtbügels 3 gut zu erkennen. Der Drahtbügel 3 ist im Wesentlichen "U"-förmig ausgeführt. Der Spiegelkopf 4 ist mit seinem Spiegelrahmen 9 gelenkig an der Unterseite 3a des "U"-förmigen Bügels gelenkig befestigt. Die sich an beiden Seiten anschließenden Schenkel sind gestuft, und zwar jeweils in Abschnitte 3b, 3c, 3d und 3e. Rastnasen 5.1 und 5.2 der Rastaufnahme 5 hintergreifen jeweils die Abschnitte 3b des Drahtbügels. Somit wird erreicht, daß der Drahtbügel am Spiegelfuß fixiert ist (die Rastausnehmung 5 gehört zum Spiegelfuß).

Der Drahtbügel weist im weiteren Verlauf auf jedem Schenkel (und zwar symmetrisch bezüglich der Pfeilrichtung X) eine Stufung mit den Abschnitten 3c und 3d auf. Diese Stufung hilft zum einen, die elastischen Eigenschaften des Drahtbügels beliebig zu gestalten, zum anderen ist sie zur räumlichen Anpassung an die Außenkontur des Fahrzeugaußenspiegels sinnvoll. An den Abschnitt 3d schließt sich das umgebogene Schenkelende 3e beidseits an. An diesen freien Schenkelenden ist der Drahtbügel 3 mittels des Gelenks 14 gelenkig mit dem Spiegelfuß 2 verbunden. Außerdem ist im Bereich der Schenkelenden 3e eine weitere Rastaufnahme vorgesehen. Der Spiegelkopf 4 weist eine als Rastausnehmungen ausgeführte Rastaufnahme 6 auf. Die Rastausnehmungen schnappen im Bereich der umgebogenen Schenkelenden 3e jeweils auf dem Drahtbügel ein. Hierdurch wird der Rahmen 9 bzw. Spiegelkopf 4 an den Schenkelenden 3e festgelegt, so daß sich zusammen mit der Festlegung an der Rastaufnahme 5 eine Arretierung des Spiegelkopfes in der Fahrstellung ergibt.

Fig. 1c zeigt eine Ansicht X des Schnittes aus Fig. 1b. Hierbei sind aus Gründen der Übersichtlichkeit lediglich Spiegelfuß, Arretiereinrichtung sowie der Drahtbügel gezeigt.

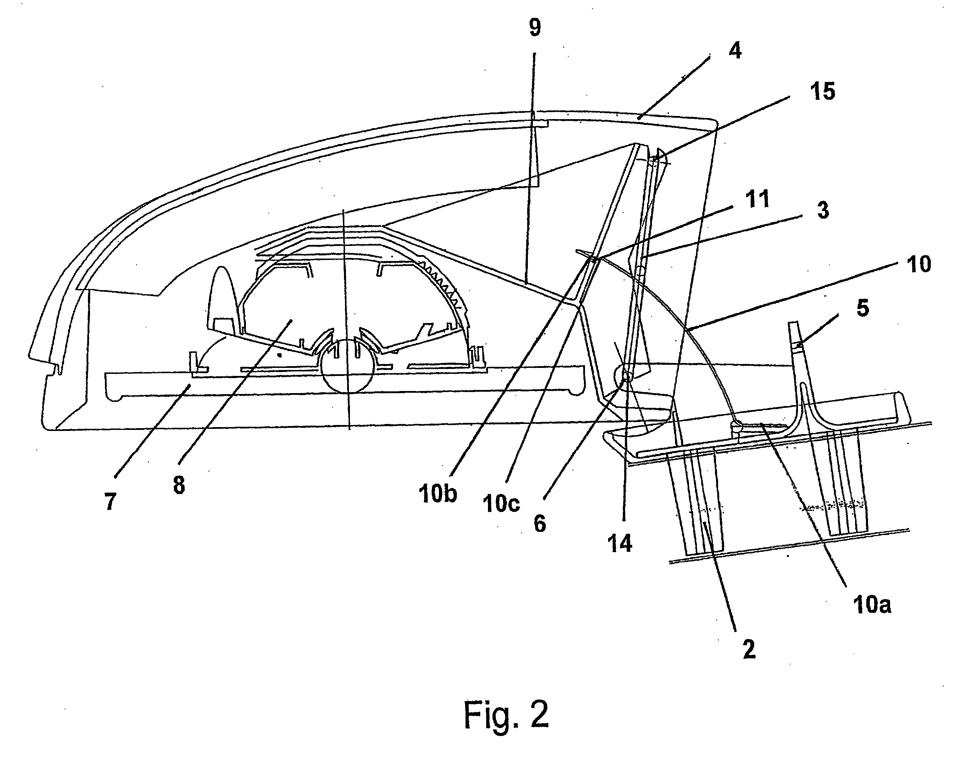

Der Drahtbügel 3 umfaßt mit seinen Abschnitten 3b jeweils die Rastausnehmung 5.1 sowie 5.2. Die Rastaufnahme 5, zu welcher die Rastausnehmungen 5.1 und 5.2 gehören, ist Teil des Spiegelfußes 2. Die Rastaufnahme weist außerdem Einlaufschrägen 5.3 auf, welche bei Bewegung des Drahtbügels in Richtung 16 diesen Drahtbügel im Bereich seiner Abschnitte 3b aufspreizen und nach Passieren der breitesten Stelle in die Rastausnehmung 5.1 bzw. 5.2 hineinfallen lassen. Auf diese Weise ergibt sich eine Schnappverbindung des Drahtbügels 3 am Spiegelfuß 2. Selbstverständlich ist es auch alternativ möglich, die Rastaufnehmung so vorzusehen, daß die Einlaufschrägen den Drahtbügel 3 nicht auseinander spreizen, sondern zusammendrücken. Die Länge bzw. der Winkel der Einlaufschrägen sowie das Material des Drahtbügels (vorliegend ist der Drahtbügel aus Stahl) sowie die Tiefe der Rastausnehmungen bestimmen unter anderem die zum Einschnappen bzw. Lösen der Schnappverbindung nötige Kraft. Diese sollte so bemessen sein, daß sich der Spiegelkopf nicht schon bei Fahrt auf unebener Fahrbahn aus der Schnappverbindung löst, andererseits jedoch ein manuelles Abklappen in die Parkstellung (siehe Fig. 2) möglich ist.

Schließlich ist in Fig. 1c noch eine Draufsicht der Blattfeder 10 zu sehen, auf deren Funktion weiter unten näher eingegangen wird.

Fig. 2 zeigt den Fahrzeugaußenspiegel aus Fig. 1 in der zum Fahrzeugheck hin abgeklappten Stellung, in der sogenannten "Parkstellung". Hierbei ist der Drahtbügel 3 aus der Rastaufnahme 5 ausgerastet. Der Rahmen 9 des Spiegelkopfes 4 ist jedoch immer noch in der Rastaufnahme 6 fixiert. Somit weist der Rahmen bzw. der Spiegelkopf 4 bezüglich des Spiegelfußes einen Drehfreiheitsgrad auf. Die Blattfeder 10 wirkt als Arretiereinrichtung für den Spiegelkopf 4 in der Parkstellung. Hierbei stellt der Widerhaken am Ende 10b der Blattfeder sicher, daß der Spiegelkopf in seinem Drehwinkel begrenzt ist. Dies kommt dadurch, daß die Flachseite des Widerhakens gegen die Umrandung der Öffnung 11 des Rahmens 9 des Spiegelkopfes schlägt. Die dem Widerhaken nachgeordnete Stufung 10c der Blattfeder sorgt dafür, daß der Spiegelrahmen in dieser Stellung verbleibt, wenn keine weiteren Kräfte aufgewendet werden (In anderen Ausführungsformen kann diese Arretiereinrichtung auch einen anderen Querschnitt als einen blattförmigen aufweisen, so sind z.B. auch Rundquerschnitte möglich).

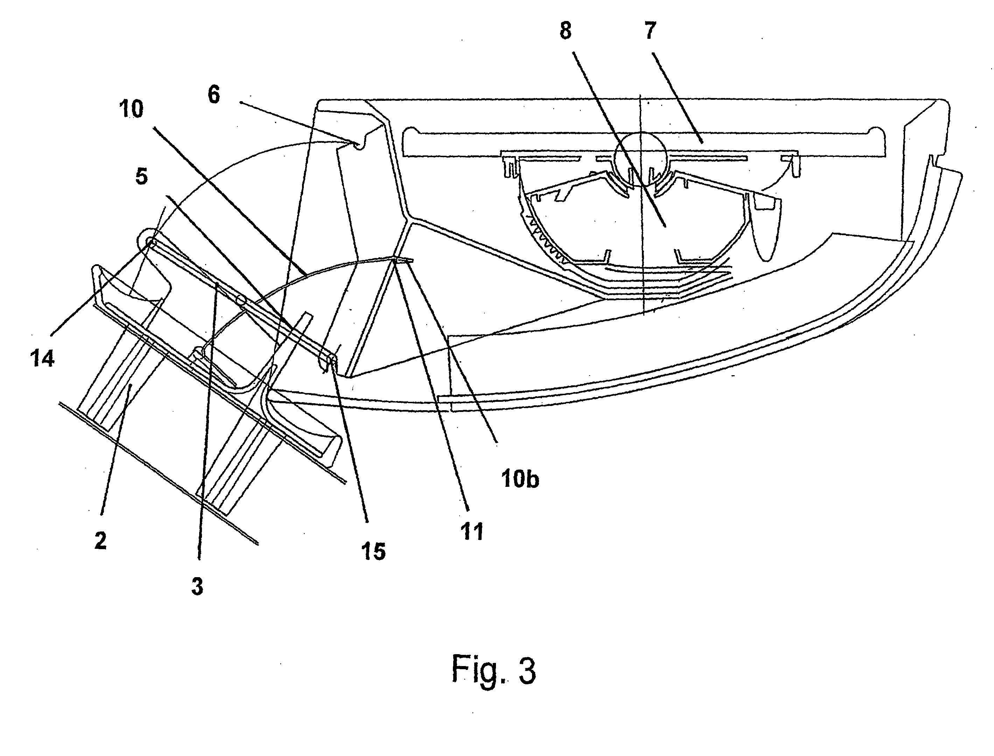

Schließlich zeigt Fig. 3 den Fahrzeugaußenspiegel aus Fig. 1 in seiner "überstreckten Stellung", d.h. zur Fahrzeugvorderseite hin abgeklappt. Hierbei ist der Drahtbügel 3 am Spiegelfuß 2 fixiert, da die Abschnitt 3b in der Rastaufnahme 5 festgelegt sind. Der Spiegelkopf hat sich jedoch mit seiner Rastaufnahme 6 von den umgebogenen Schenkelenden 3e losgelöst. Für die Schnappverbindung zwischen den Schenkelenden 3e sowie den korrespondierenden Ausnehmungen der Rastaufnahme 6 gilt das zu Fig. 1c Gesagte. Der Schwenkwinkel des Spiegelkopfes 4 wird, wie in Fig. 3 gezeigt, durch die Blattfeder 10 mit ihrem widerhakenartigen Ende 10b, welches in die Öffnung 11 des Spiegelrahmens 9 des Spiegelkopfes 4 eingreift, begrenzt.

Sowohl in Fig. 2 als auch in Fig. 3 kann ein manuelles Rückführen in die in Fig. 1a gezeigte "Fahrstellung" erfolgen. Hierzu ist lediglich im Schwenkwinkel kurz vor Erreichen der Fahrstellung ein erhöhter Druck auszuüben, so daß die jeweiligen Rastaufnahmen mit den korrespondierenden Abschnitten des Drahtbügels 3 in Schnappverbindung treten können.

Eine besonders vorteilhafte Weiterbildung sieht vor, daß eine Rastausnehmung außerdem (vorzugsweise zwei) Einlaufschrägen aufweist, welche bei Bewegung des (vorzugsweise "U"-förmigen) Drahtbügels auf den Einlaufschrägen diesen Drahtbügel im Bereich der Schenkel des "U"-aufspreizen bzw. Zusammendrücken und nach Passieren einer Extremstelle (also der breitesten bzw. schmalsten Stelle zwischen den Einlaufschrägen) diesen vorher mit der Einlaufschräge in Kontakt stehenden Abschnitt in eine korrespondierende Rastausnehmung hineinfallen lassen, um somit die Schenkelabschnitte des U zu fixieren. Die betreffende Rastausnehmung kann hierbei entweder am Spiegelfuß oder am Spiegelkopf angebracht sein, erfindungswesentlich ist jedoch, daß durch ein einfaches Bauteil (einen kostengünstig herzustellenden Drahtbügel) und dessen Aufweitung bzw. Zusammenpressung der Schenkel eine Federkraft entsteht, welche dann zur sicheren Fixierung von Spiegelkopf und Spiegelfuß genutzt wird. Hierdurch ist eine im Betrieb feste, jedoch aus Sicherheitsgründen lösbare Verbindung gegeben, welche kostengünstig herzustellen ist. Diese kann darüber hinaus auch noch platzsparend hergestellt werden, da die gesamt Drahtbügelkonstruktion im Inneren des Spiegelgehäuses (im Zwischenraum zwischen Spiegelfuß und Spiegelkopf, von außen nicht sichtbar) angeordnet ist.

Die Erfindung ermöglicht es, einen hochstabilen Spiegel vollständig aus Kunststoff (Thermoplasten) zu fertigen. Aufgrund der Gestaltung des "U"-förmigen Drahtbügels ist es möglich, daß dieser selbst bei voller Belastung und guter Haltekraft allein auf Kunststoffflächen sich abstützt, ohne daß diese beschädigt werden (durch Fließvorgänge etc., selbst bei 100°C oder bei Minustemperaturen ist diese Dauerbelastung möglich). Es werden außerdem gegenüber bekannten Konstruktionen zwei Achsen, ein Zwischengelenk sowie eine Zugfeder ersetzt. Im Gegensatz zu Außenspiegeln, welche durch Federkraft in der Fahrstellung gehalten werden, ist vorliegend durch den Rastmechanismus in der Fahrstellung zum einen eine feste definierte Lage einstellbar, durch die Steigung und Länge der Einlaufschräge sind Einrastkräfte etc. für die jeweilige Länderanforderung einfach einzustellen. Somit ergibt sich ein Fahrzeugaußenspiegel mit sehr niedrigen Produktionskosten, ohne Nachteil bei Sicherheit und Funktion, welcher zudem sehr platzsparend zu konstruieren ist.

## Patentansprüche

1. Fahrzeugaußenspiegel (1) mit einem Spiegelfuß (2) und einem damit über eine Anlenkung verbundenen Spiegelkopf (4),
**dadurch gekennzeichnet,**
**daß** die Anlenkung als Drahtbügel (3) ausgeführt ist, welcher zur Arretierung des Spiegelkopfes bezüglich des Spiegelfußes in mindestens eine Rastaufnahme (5; 6) einschnappbar ist.

2. Fahrzeugaußenspiegel nach Anspruch 1, **dadurch gekennzeichnet, daß** die Rastaufnahme (5; 6) als ein oder mehrere Rastausnehmungen am Spiegelfuß (2) und/oder am Spiegelkopf (4) ausgeführt ist.

3. Fahrzeugaußenspiegel nach einem der vorhergehenden Ansprüche, **dadurch gekennzeichnet, daß** der Drahtbügel (3) im Wesentlichen "U"-förmig geformt ist und mindestens eine Rastaufnahme (5) so ausgebildet ist, daß sie die Schenkel des "U" umgreift.

4. Fahrzeugaußenspiegel nach Anspruch 3, **dadurch gekennzeichnet, daß** die freien Schenkelenden (3e) des "U" umgebogen und am Spiegelfuß (2) gelenkig gelagert sind.

5. Fahrzeugaußenspiegel nach Anspruch 4, **dadurch gekennzeichnet, daß** zwei Rastaufnahmen vorgesehen sind, wobei die erste Rastaufnahme (5) zum Einschnappen des Schenkels des "U" am Spiegelfuß (2) ausgebildet ist und der Spiegelkopf (4) eine zweite Rastaufnahme (6) zur Aufnahme der umgebogenen Schenkelenden (3e) des "U" aufweist.

6. Fahrzeugaußenspiegel nach einem der Ansprüche 3 bis 5, **dadurch gekennzeichnet, daß** der Spiegelkopf (4) an der Unterseite des "U" gelenkig gelagert ist.

7. Fahrzeugaußenspiegel nach einem der Ansprüche 3 bis 6, **dadurch gekennzeichnet, daß** die Schenkel des "U" eine Stufung (3b bis 3e) aufweisen.

8. Fahrzeugaußenspiegel nach einem der vorhergehenden Ansprüche, **dadurch gekennzeichnet, daß** der Drahtbügel (3) aus Stahl ist.

9. Fahrzeugaußenspiegel nach einem der vorhergehenden Ansprüche, **dadurch gekennzeichnet, daß** der Spiegelfuß (2) aus einem Kunststoff oder einem Metall ist.

10. Fahrzeugaußenspiegel nach einem der vorhergehenden Ansprüche, **dadurch gekennzeichnet, daß** der Spiegelkopf (4) einen Rahmen (9) zum Halten eines Spiegelflächenelements (7) sowie einen Verstellantrieb (8) zum Verstellen des Spiegelflächenelementes bezüglich des Rahmens aufweist.

11. Fahrzeugaußenspiegel nach Anspruch 10, **dadurch gekennzeichnet, daß** der Rahmen (9) aus Kunststoff ist.

12. Fahrzeugaußenspiegel nach einem der vorhergehenden Ansprüche, **dadurch gekennzeichnet, daß** dieser eine Arretiereinrichtung (10) zum Halten des Spiegelkopfes (4) in einer bezüglich des Spiegelfußes (2) abgeklappten Stellung aufweist.

13. Fahrzeugaußenspiegel nach Anspruch 12, **dadurch gekennzeichnet, daß** die Arretiereinrichtung (10) als am Spiegelfuß (2) befestigte Blattfeder mit einem gestuften widerhakenartigen Ende (10b) ausgeführt ist, wobei das Ende so angeordnet ist, daß es eine Öffnung (11) im Rahmen (9) des Spiegelkopfes (4) hintergreift.

14. Fahrzeugaußenspiegel nach einem der vorhergehenden Ansprüche, **dadurch gekennzeichnet, daß** der Spiegelkopf (4) einen Blinker (12) zur Fahrtrichtungsanzeige enthält.

15. Fahrzeugaußenspiegel nach einem der Ansprüche 3 bis 14, **dadurch gekennzeichnet, daß** mindestens eine Rastaufnahme Einlaufschrägen aufweist, welche bei einer Relativ-Bewegung des Drahtbügels zu diesen Einlaufschrägen den Drahtbügel aufspreizen oder Zusammendrücken und nach Passieren einer Extremstelle den mit den Einlaufschrägen (5.3) in Kontakt stehenden Abschnitt des Drahtbügels nach Passieren einer Extremstelle in Rastausnehmungen (5.1; 5.2) hineinfallen lassen.

## Claims

1. Exterior mirror for motor vehicles (1) comprising a mirror base (2) and a mirror head (4) which is hinged thereonto, **characterised in that** the hinge is designed as a wire shape (3) which snaps into at least one detention point (5; 6) for the purpose of arresting the mirror head relative to the mirror base.

2. Exterior mirror for motor vehicles according to Claim 1, **characterised in that** the detention point (5; 6) is designed as one or more detention cutout at the mirror base (2) and/or at the mirror head (4).

3. Exterior mirror for motor vehicles according to one of the above claims, **characterised in that** the wire shape (3) is essentially U-shaped, and at least one detention point (5) is designed so that it embraces the shanks of the U.

4. Exterior mirror for motor vehicles according to Claim 3, **characterised in that** the free shank ends (3e) of the U are bent and hinged onto the mirror base (2).

5. Exterior mirror for motor vehicles according to Claim 4, **characterised in that** two detention points are provided, and the first detention point (5) is designed to snap the shank of the U into the mirror base, and the mirror head (4) comprises a second detention point (6) for accommodating the bent shank ends (3e) of the U.

6. Exterior mirror for motor vehicles according to one of Claims 3 to 5, **characterised in that** the mirror head (4) is hingedly mounted onto the lower side of the U.

7. Exterior mirror for motor vehicles according to one of Claims 3 to 6, **characterised in that** the shanks of the U are stepped (3b to 3e).

8. Exterior mirror for motor vehicles according to one of the above claims, **characterised in that** the wire shape (3) is made of steel.

9. Exterior mirror for motor vehicles according to one of the above claims, **characterised in that** the mirror base (2) is made of a plastic material or a metal.

10. Exterior mirror for motor vehicles according to one of the above claims, **characterised in that** the mirror head (4) comprises both a frame (9) for holding a mirror surface element (7) and an adjustment drive (8) for adjusting the mirror surface element relative to the frame.

11. Exterior mirror for motor vehicles according to Claim 10, **characterised in that** the frame (9) is made of a plastic material.

12. Exterior mirror for motor vehicles according to one of the above claims, **characterised in that** it comprises an arresting device (10) for holding the mirror head (4) in a folded down position relative to the mirror base (2).

13. Exterior mirror for motor vehicles according to Claim 12, **characterised in that** the arresting device (10) as designed as a leaf spring which is mounted on the mirror base (2) and provided with a stepped end like a barbed hook, and the end is arranged in such a manner that it reaches behind an opening (11) in the frame (9) of the mirror head (4).

14. Exterior mirror for motor vehicles according to one of the above claims, **characterised in that** the mirror head (4) includes a flasher (12) as driving direction indicator.

15. Exterior mirror for motor vehicles according to one of Claims 3 to 14, **characterised in that** at least one detention point comprises entry slants which during a relative movement of the wire shape relative to the insert slants spread open the wire shape or press it together, and after having passed an extreme point let the section of the wire shape which is in contact with the entry slants (5.3) drop into detent cutouts (5.1; 5.2).

## Revendications

1. Rétroviseur extérieur (1) de véhicule, comportant un pied de rétroviseur (2) et une tête de rétroviseur (4) qui est reliée au pied par l'intermédiaire d'une articulation,
**caractérisé en ce que** l'articulation est réalisée sous la forme d'un étrier filaire (3), qui, pour bloquer la tête du rétroviseur par rapport au pied du rétroviseur, peut être encliqueté dans au moins un logement d'encliquetage (5; 6).

2. Rétroviseur extérieur de véhicule selon la revendication 1, **caractérisé en ce que** le logement d'encliquetage (5; 6) est agencé sous la forme d'un ou plusieurs évidements d'encliquetage dans le pied (2) du rétroviseur et/ou sur la tête (4) du rétroviseur.

3. Rétroviseur extérieur de véhicule selon l'une des revendications précédentes, **caractérisé en ce que** l'étrier filaire (3) est essentiellement en forme de "U" et au moins un logement d'encliquetage (5) est agencé de telle sorte qu'il entoure les branches du "U".

4. Rétroviseur extérieur de véhicule selon la revendication 3, **caractérisé en ce que** les extrémités libres (3e) des branches du "U" sont repliées et sont montées d'une manière articulée sur le pied (2) du rétroviseur.

5. Rétroviseur extérieur de véhicule selon la revendication 4, **caractérisé en ce que** deux logements d'encliquetage sont prévus, le premier logement d'encliquetage (5) étant conçu pour l'encliquetage de la branche du "U" sur le pied (2) du rétroviseur, et la tête (4) du rétroviseur comportant un second logement d'encliquetage (6) pour le logement des extrémités repliées (3e) des branches du "U".

6. Rétroviseur extérieur de véhicule selon l'une des revendications 3 à 5, **caractérisé en ce que** la tête (4) du rétroviseur est montée de manière articulée sur le côté inférieur du "U".

7. Rétroviseur extérieur de véhicule selon l'une des revendications 3 à 6, **caractérisé en ce que** les branches du "U" possèdent une partie étagée (3b à 3e).

8. Rétroviseur extérieur de véhicule selon l'une des revendications précédentes, **caractérisé en ce que** l'étrier filaire (3) est réalisé en acier.

9. Rétroviseur extérieur de véhicule selon l'une des revendications précédentes, **caractérisé en ce que** le pied (2) du rétroviseur est formé d'une matière plastique ou d'un métal.

10. Rétroviseur extérieur de véhicule selon l'une des revendications précédentes, **caractérisé en ce que** la tête (4) du rétroviseur comporte un cadre (9) pour retenir un élément de surface de miroir (7), ainsi qu'un dispositif d'entraînement de réglage (8) pour régler l'élément de surface de miroir par rapport au cadre.

11. Rétroviseur extérieur de véhicule selon la revendication 10, **caractérisé en ce que** le cadre (9) est réalisé en matière plastique.

12. Rétroviseur extérieur de véhicule selon l'une des revendications précédentes, **caractérisé en ce que** ce rétroviseur comporte un dispositif de blocage (10) pour retenir la tête (4) du rétroviseur dans une position rabattue par rapport au pied (2) du rétroviseur.

13. Rétroviseur extérieur de véhicule selon la revendication 12, **caractérisé en ce que** le dispositif de blocage (10) est réalisé sous la forme d'un ressort à lame fixé sur le pied (2) du rétroviseur et comportant une extrémité étagée en forme de crochet (10b), l'extrémité étant disposée de telle sorte qu'elle met en prise arrière une ouverture (11) formée dans le cadre (9) de la tête (4) du rétroviseur.

14. Rétroviseur extérieur de véhicule selon l'une des revendications précédentes, **caractérisé en ce que** la tête (4) du rétroviseur contient un clignotant (12) servant à indiquer une direction de déplacement.

15. Rétroviseur extérieur de véhicule selon l'une des revendications 3 à 14, **caractérisé en ce qu'**au moins un logement d'encliquetage comporte des biseaux d'entrée, qui, lors d'un déplacement relatif de l'étrier filaire par rapport à ces biseaux d'entrée, écartent ou compriment l'étrier filaire et, après franchissement d'un point extrême, permettent à la partie de l'étrier filaire, qui est en contact avec les biseaux d'entrée (5.3), de s'engager dans des logements d'encliquetage (5.1, 5.2) après avoir franchi une position d'extrémité.
